# EUROPEAN PATENT SPECIFICATION

(11) **EP 3 900 984 B1**
(45) Date of publication and mention of the grant of the patent: **25.11.2026**
(21) Application number: 19900838.4
(22) Date of filing: 17.12.2019
(51) Int. Cl.: B60R 11/02, B60R 16/02

(54) **WORK VEHICLE**
NUTZFAHRZEUG
VÉHICULE DE TRAVAIL

(30) Priority: 20.12.2018 JP 2018238889
(43) Date of publication of application: 27.10.2021
(73) Proprietor: Kubota Corporation, Osaka-shi, Osaka 530-0011 (JP)
(72) Inventor: MISAKI Shinji, Sakai-shi, Osaka 590-0823 (JP)
(74) Representative: Bittner, Thomas L.
(86) International application number: PCT/JP2019/049344
(87) International publication number: WO 2020/129961

(56) References cited:
- EP-A2- 0 346 154
- WO-A1-2018/124058
- JP-A- 2016 154 501
- JP-A- 2018 127 208
- JP-A- 2018 127 208
- JP-A- 2018 186 727
- JP-A- H08 207 678
- ZHANG X ET AL: "Method for an electronic controlled platooning system of agricultural vehicles", VEHICULAR ELECTRONICS AND SAFETY (ICVES), 2009 IEEE INTERNATIONAL CONFERENCE ON, IEEE, PISCATAWAY, NJ, USA, 11 November 2009 (2009-11-11), pages 156 - 161, XP031619927, ISBN: 978-1-4244-5442-6

## Description

### TECHNICAL FILED

The present invention is based on a work vehicle having a rollover protection structure (ROPS) which is disposed around a driver's seat, and a receiving device which receives positional information from a satellite, wherein a harness for the receiving device is routed along an outer peripheral face of the ROPS. Such a work vehicle is already known from ZHANG X ET AL: "Method for an electronic controlled platooning system of agricultural vehicles", VEHICULAR ELECTRONICS AND SAFETY(ICVES), 2009 IEEE INTERNATIONAL CONFERENCE ON, IEEE, PISCATAWAY,NJ, USA, 11 November 2009 (2009-11-11), pages 156-161, XP031619927, ISBN: 978-1-4244-5442-6. Similar work vehicles are also known from EP 0 346 154 A2 and WO 2018/124058 A1, JP 2016 154501 A, JP 2018 127208 A, JP 2018 186727 A and JP H08 207678 A.

### BACKGROUND ART

Another work vehicle described in JP 2016-154501 A comprises a rollover protection structure (ROPS) ("ROPS 26") disposed around a driver's seat and a receiving device ("receiving antenna 51") which receives positional information from a satellite. In the described work vehicle, the receiving device is supported to an upper part of the ROPS.

### SUMMARY OF THE INVENTION

Technical Problem to Be Solved by the Invention

There is a need to extend a harness for the receiving device downward from the upper part of the ROPS in order to connect the harness for the receiving device to a controller. In this case, there is a room for consideration of how to route the harness in order to route the harness easily.

In view of the above situation, there is a demand for a work vehicle with a foldable ROPS, in which the ROPS comprises a rear combination lamp and the harness for the receiving device can be routed such that the harness has a longer service life.

### Solution to the Problem

The problem is solved by the work vehicle according to the independent claim 1. Embodiments are the subject matter of dependent claims in the appended set of claims.

The harness can be routed such that the light emitted by the rear combination lamp is prevented from being blocked by the harness and the harness is prevented from the heat and the light of the rear combination lamp. Further, the harness is subjected to lower forces when folding the ROPS. Also, by covering the harness with the cover, it is possible to protect the harness, reduce exposure of the harness, and improve an appearance of the harness.

Further preferably in the invention, the harness may be routed along an inner side part in the outer peripheral face of the ROPS, the inner side part being directed to an inner side of a vehicle body, and the cover is configured to cover the harness from front and below.

With such a feature, the harness is located on the inner side of the vehicle body relative to the ROPS. With this, it is possible to prevent the harness from being contacted with an object from outside the vehicle body. Also, by covering the harness with the cover from front and below, it is possible to reduce exposure of the harness to a driver's seat side.

Further preferably in the invention, the receiving device may be supported to the beam part, the harness may be routed between/across the beam part and the strut part, and the cover may extend between/across the beam part and the strut part.

With such a feature, the receiving device is supported to the beam part which is located at a relatively high position in the ROPS. With this, the receiving device can favorably receive positional information without being affected by an obstacle. Also, by routing the harness between/across the beam part and the strut part, the harness can be easily extended downward from the beam part. Further, since the cover extends between/across the beam part and the strut part, the harness can be covered with the cover over a longer section from the beam part to the strut part.

Further preferably in the invention, in order to allow the harness to enter from a rear side to the inside of the cover, the cover is formed in a cross-sectional shape which is opened rearward.

With such a feature, by making the harness enter from a rear side of the cover to the inside of the cover, the harness can be easily attached.

Further preferably in the invention, the harness is fixed to the cover by a fixing tool.

According to the feature, it is possible to prevent that the harness is detached from the cover.

### BRIEF DESCRIPTION OF THE DRAWINGS

- Fig. 1: is a left side view showing a tractor;
- Fig. 2: is a plan view showing a tractor;
- Fig. 3: is a rear view showing a rollover protection structure (ROPS);
- Fig. 4: is a view in section taken on IV-IV in Fig. 3;
- Fig. 5: is a rear view showing a harness and a harness cover;
- Fig. 6: is a perspective view showing the harness and the harness cover; and
- Fig. 7: is a view in section taken on VII-VII in Fig. 5.

### DETAILED DESCRIPTION OF PREFERRED EMBODIMENTS

Embodiments for carrying out the invention will be described with reference to the drawings.

### [Overall Configuration of the Tractor]

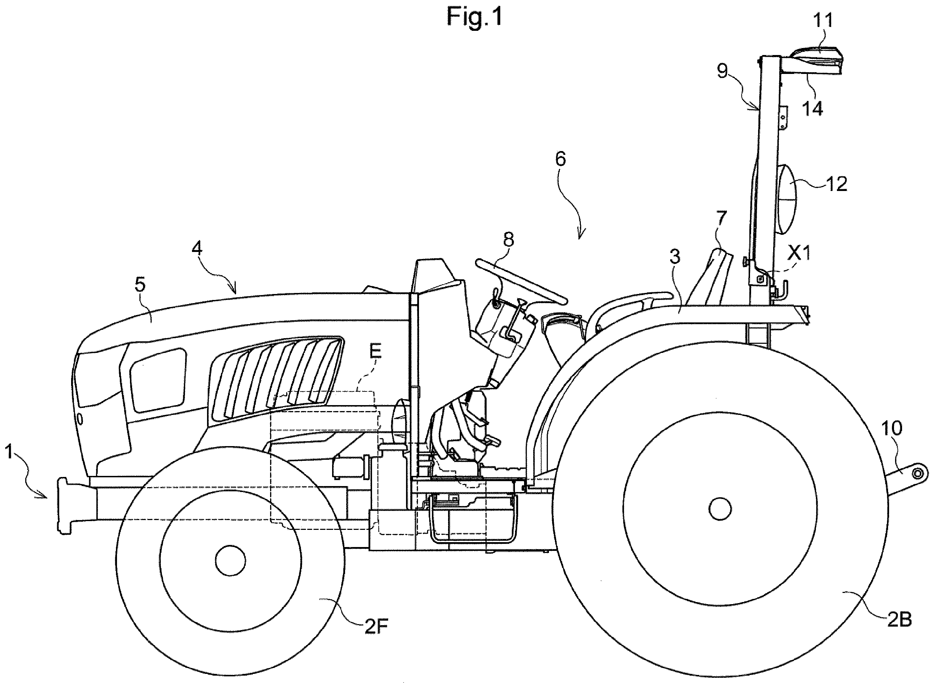

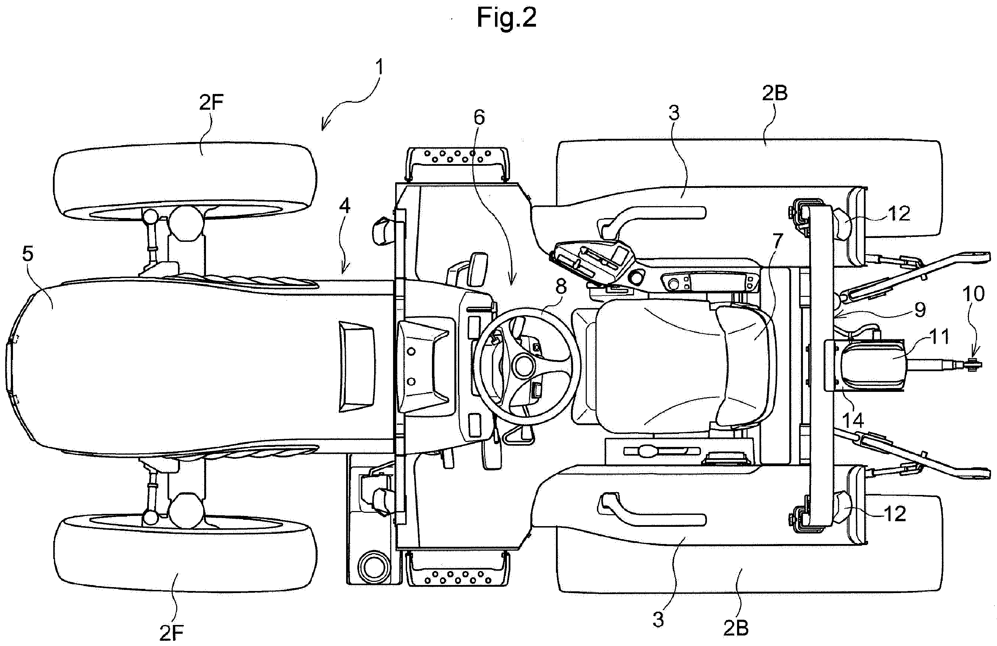

Fig. 1 and Fig. 2 show a tractor (work vehicle). The tractor includes a traveling vehicle body 1. The traveling vehicle body 1 is configured by a four-wheel-drive traveling vehicle body, for example. The traveling vehicle body 1 includes a pair of drivable-steerable right and left front wheels 2F, and a pair of drivable right and left rear wheels 2B. A pair of right and left fenders 3 are disposed for covering the pair of right and left rear wheels 2B, respectively.

At a front half part of traveling vehicle body 1, there is provided an engine section 4. At the engine section 4, there are provided an engine E and a hood 5 which houses the engine E. At a rear part of the traveling vehicle body 1, there is provided a driving section 6 on which a driver rides. The driving section 6 includes a driver's seat 7 on which the driver sits, and a steering wheel 8 for steering the traveling vehicle body 1. A rollover protection structure (ROPS) 9 is provided around the driver's seat 7. At a rear end part of the traveling vehicle body 1, there is provided a link mechanism 10 to which an implement (not shown) such as a rotary cultivator or the like is attached.

The tractor includes a global positioning system (GPS) antenna unit 11 (receiving device) and an inertial measurement unit (not shown). The GPS antenna unit 11 is a unit which receives positional information from a global positioning system (GPS) satellite and measures a position of the traveling vehicle body 1 based on the received positional information. The inertial measurement unit is a unit which measures inertial information (such as a yaw angle, a pitch angle and a roll angle) of the traveling vehicle body 1. The tractor includes an automatic steering mechanism (not shown) which automatically steers the traveling vehicle body 1 so as to allow the traveling vehicle body 1 to travel along a target travel route based on the position of the traveling vehicle body 1 measured by the GPS antenna unit 11 and on the inertial information of the traveling vehicle body 1 measured by the inertial measurement unit.

### [ROPS]

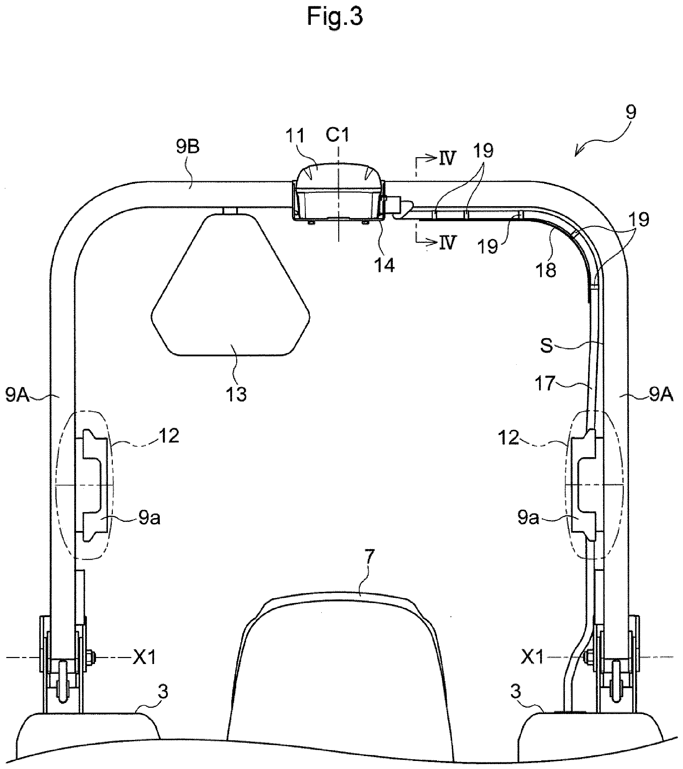

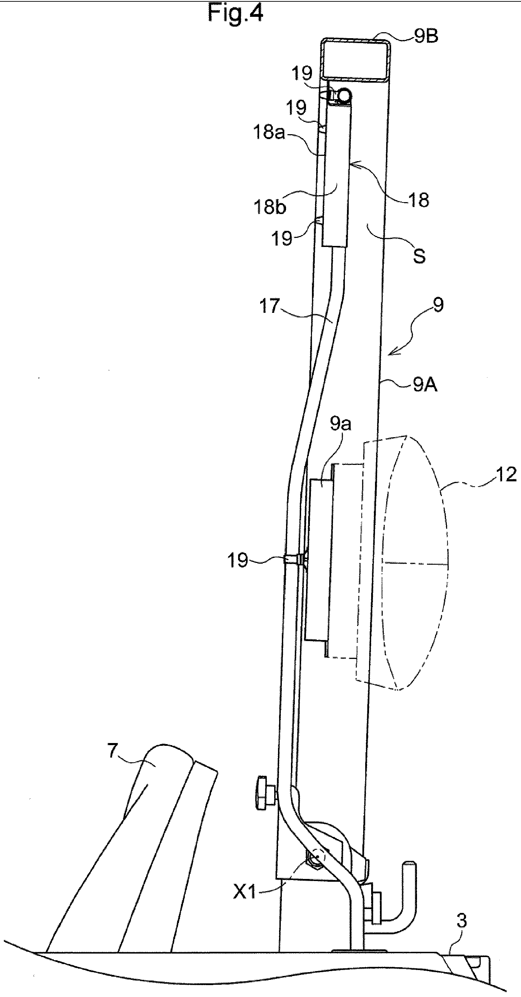

As shown in Fig. 3 and Fig. 4, the ROPS 9 is located on lateral outer sides relative to the driver's seat 7; and includes a pair of right and left strut parts 9A which extend in the vertical direction, and a beam part 9B which is located upward of the driver's seat 7 and extends in a right-left direction of the vehicle body. The ROPS 9 is configured to be foldable rearward around an axis X1 which extends in the right-left direction of the vehicle body.

Rear combination lamps 12 are attached to the left strut part 9A and the right strut part 9A, respectively. In the left strut part 9A and the right strut part 9A, there are respectively provided attaching parts 9a to which the rear combination lamps 12 are attached, respectively. A low-speed vehicle mark 13 is attached to the beam part 9B. The low-speed vehicle mark 13 is arranged at a position deviated to a left side relative to a right-left center C1 of the beam part 9B (a right-left center of the vehicle body).

### [GPS Antenna Unit]

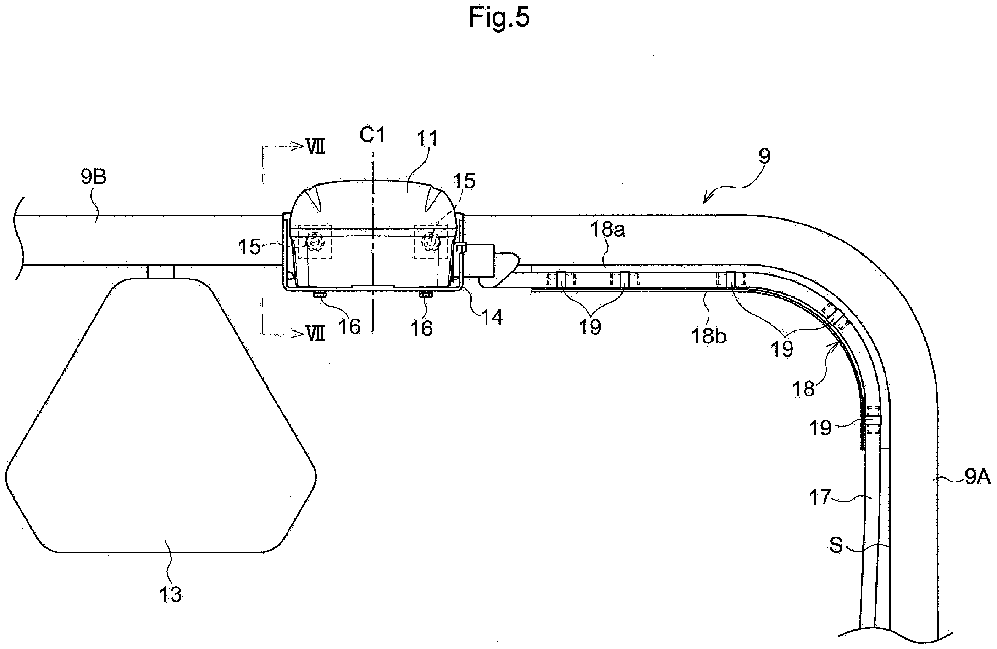

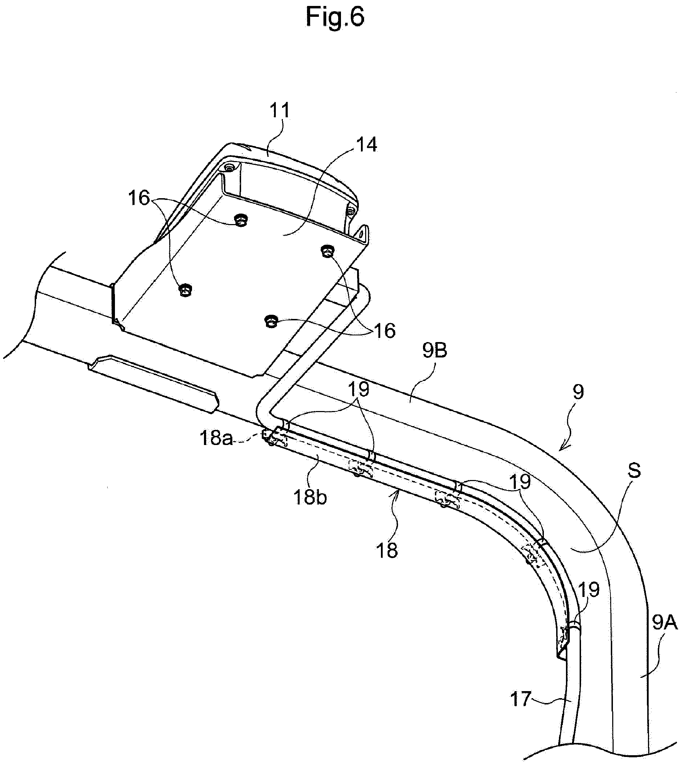

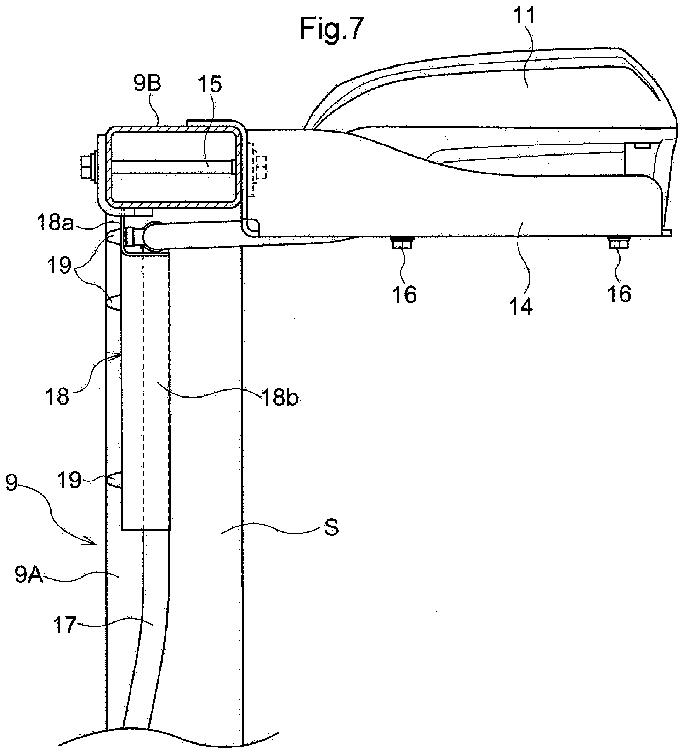

As shown in Fig. 3 to Fig. 7, the GPS antenna unit 11 is supported to an upper part of the ROPS 9. Specifically, the GPS antenna unit 11 is supported to a right-left central part of the beam part 9B, a right-left center thereof being in alignment with the right-left center of the vehicle body (the right-left center C1 of the beam part 9B). At the right-left center of the beam part 9B, there is provided a GPS stay 14 which supports the GPS antenna unit 11. The GPS stay 14 is supported (cantilevered) to the beam part 9B, the GPS stay 14 being projecting rearward from the beam part 9B. The GPS stay 14 is fixed to the beam part 9B by a bolt 15 which penetrate through the beam part 9B from front. The GPS antenna unit 11 is fixed to the GPS stay 14 by a bolt 16 which penetrate through the GPS stay 14 from below, the GPS antenna unit 11 being mounted on and supported to the GPS stay 14.

### [Harness]

The harness 17 for the GPS antenna unit 11 is provided between/across the GPS antenna unit 11 and a controller (not shown) which controls the automatic steering mechanism and the like. The harness 17 is routed along the outer peripheral face of the ROPS 9. Specifically, the harness 17 is routed along an inner side part S in the outer peripheral face of the ROPS 9, the inner side part S being directed to an inner side of the vehicle body. The harness 17 is routed between/across a right-side part of the beam part 9B and the right strut part 9A, the harness 17 being drawn out from a right-side part of the GPS antenna unit 11 to an opposite side (right side) of a side at which the low-speed vehicle mark 13 is located, relative to the GPS antenna unit 11. The harness 17 extends downward along a front side of a right attaching part 9a, and penetrates through a rear-side part relative to the axis X1 in the right fender 3 and extends to the controller.

### [Cover]

There is provided a cover 18 which is configured to cover the harness 17. The cover 18 extends between/across the right-side part of the beam part 9B and an upper part of the right strut part 9A. The harness 17 is fixed by fixing tools 19 to the cover 18 (vertical part 18a) and the right attaching part 9a. The cover 18 includes a part which extends along the right-side part of the beam part 9B, a part which extends along the upper part of the right strut part 9A, and a part which extends along a curved part between/across the beam part 9B and the right strut part 9A. The cover 18 is configured to cover the harness 17 from front and from a side opposing to the inner side part S (from below and from a lateral inner side, for example). In order to allow the harness 17 to enter from a rear side to the inside of the cover 18, the cover 18 is formed in a cross-sectional shape (an approximately L-letter cross-sectional shape) which is opened rearward. The cover 18 includes the vertical part 18a which is vertical to the inner side part S, and a bottom part 18b extending rearward from an end part, in the vertical part 18a, on a side opposing to the inner side part S, the bottom part 18b extending parallel with the inner side part S.

### [Other Embodiments]

(1) In the foregoing embodiment, the harness 17 is routed along the inner side part S in the outer peripheral face of the ROPS 9, the inner side part S being directed to an inner side of the vehicle body. However, the harness 17 may be routed along an outer side part in the outer peripheral face of the ROPS 9 (such as a front face, a rear face, an upper face and a lateral outer face of the ROPS 9), the outer side part being directed to an outer side of the vehicle body.
(2) In the foregoing embodiment, the harness 17 is routed between/across the right-side part of the beam part 9B and the right strut part 9A. However, the harness 17 may be routed between/across a left-side part of the beam part 9B and the left strut part 9A.
(3) In the foregoing embodiment, the cover 18 extends between/across the right-side part of the beam part 9B and the upper part of the right strut part 9A. That is, the cover 18 does not cover a part in the harness 17 lower than the upper part of the right strut part 9A. However, the cover 18 may extend between/across the right-side part of the beam part 9B and a lower part of the right strut part 9A. That is, the cover 18 may cover the part in the harness 17 lower than the upper part of the right strut part 9A, too.
(4) In the foregoing embodiment, in order to allow the harness 17 to enter from a rear side into the inside of the cover 18, the cover 18 is formed in the cross-sectional shape which is opened rearward. However, in order to allow the harness 17 to enter from a front side into the inside of the cover 18, the cover 18 may be formed in a cross-sectional shape which is opened forward. Still alternatively, the cover 18 may be formed in an approximately U-shaped cross-sectional shape (a cross-sectional shape which is not opened forward, rearward or downward).

### INDUSTRIAL APPLICABILITY

The invention can be used for a work vehicle (a tractor, for example) having a receiving device which receives positional information from a satellite.

### DESCRIPTION OF REFERENCE MARKS

- 7: Driver's seat
- 9: ROPS
- 9A: Strut part
- 9B: Beam part
- 11: GPS antenna unit (receiving device)
- 17: Harness
- 18: Cover
- 19: Fixing tool
- S: Inner side part

## Claims

1. A work vehicle comprising:
- a rollover protection structure (ROPS) (9) which is disposed around a driver's seat (7); and
- a receiving device (11) which is supported to an upper part of the ROPS (9) and receives positional information from a satellite;
- wherein a harness (17) for the receiving device that is provided between/across the receiving device (11) and a controller is routed along an outer peripheral face of the ROPS (9),
wherein the ROPS (9) is located at lateral outside relative to the driver's seat (7), the ROPS (9) including a pair of right and left strut parts (9A) which extend in a vertical direction, and a beam part (9B) which is located at an upper side relative to the driver's seat (7) and extends in the right-left direction of the vehicle body,
**characterized in that**:
- a cover (18) which is configured to cover the harness (17) is provided
- the ROPS (9) is foldable rearward around an axis which extends in a right-left direction of a vehicle body, and
- the harness (17) extends downward along one of sides in the right-left direction of the ROPS (9), and penetrates through a rear-side part of a fender relative to the axis, the fender being on said one of the sides in the right-left direction,
- in the strut parts (9A), there are respectively provided attaching parts (9a) to which rear combination lamps (12) are attached respectively, and
- the harness (17) extends downward along a front side of one of the attaching parts (9a).

2. The work vehicle according to claim 1, wherein the harness (17) is routed along an inner side part (S) in the outer peripheral face of the ROPS (9), the inner side part (S) being directed to an inner side of the vehicle body, and
the cover (18) is configured to cover the harness (17) from front and below.

3. The work vehicle according to claim 2, wherein
- the receiving device (11) is supported to the beam part (9B),
- the harness (17) is routed between/across the beam part (9B) and the strut part (9A), and
- the cover (18) extends between/across the beam part (9B) and the strut part (9A).

4. The work vehicle according to claim 3, wherein, in order to allow the harness (17) to enter from a rear side to an inside of the cover (18), the cover (18) is formed in a cross-sectional shape which is opened rearward.

5. The work vehicle according to any one of claims 1 to 4, wherein the harness (17) is fixed to the cover (18) by a fixing tool (19).

## Patentansprüche

1. Arbeitsfahrzeug, aufweisend:
- eine Überrollschutzstruktur (ROPS) (9), die um einen Fahrersitz (7) herum angeordnet ist; und
- eine Empfangsvorrichtung (11), die an einem oberen Teil der ROPS (9) gelagert ist und Positionsinformationen von einem Satelliten empfängt;
- wobei ein Kabelbaum (17) für die Empfangsvorrichtung, der zwischen/über der Empfangsvorrichtung (11) und einer Steuerung vorgesehen ist, entlang einer äußeren Umfangsfläche der ROPS (9) geführt ist,
wobei die ROPS (9) seitlich außen relativ zum Fahrersitz (7) angeordnet ist, wobei die ROPS (9) ein Paar rechter und linker Strebenteile (9A), die sich in einer vertikalen Richtung erstrecken, und ein Trägerteil (9B) aufweist, das an einer oberen Seite relativ zum Fahrersitz (7) angeordnet ist und sich in der Rechts-Links-Richtung der Fahrzeugkarosserie erstreckt,
**dadurch gekennzeichnet, dass**
- eine Abdeckung (18) vorgesehen ist, die eingerichtet ist, den Kabelbaum (17) abzudecken,
- die ROPS (9) um eine Achse, die sich in einer Rechts-Links-Richtung einer Fahrzeugkarosserie erstreckt, nach hinten klappbar ist, und
- der Kabelbaum (17) sich entlang einer der Seiten in der Rechts-Links-Richtung der ROPS (9) nach unten erstreckt und durch einen relativ zur Achse rückseitigen Teil eines Kotflügels durchdringt, wobei sich der Kotflügel auf der einen der Seiten in der Rechts-Links-Richtung befindet,
- in den Strebenteilen (9A) jeweils Befestigungsteile (9a) vorgesehen sind, an denen jeweils hintere Kombinationsleuchten (12) befestigt sind, und
- der Kabelbaum (17) sich entlang einer Vorderseite eines der Befestigungsteile (9a) nach unten erstreckt.

2. Arbeitsfahrzeug nach Anspruch 1, wobei der Kabelbaum (17) entlang eines inneren Seitenteils (S) in der äußeren Umfangsfläche der ROPS (9) geführt ist, wobei das innere Seitenteil (S) zu einer Innenseite der Fahrzeugkarosserie gerichtet ist, und
die Abdeckung (18) eingerichtet ist, den Kabelbaum (17) von vorne und unten abzudecken.

3. Arbeitsfahrzeug nach Anspruch 2, wobei
- die Empfangsvorrichtung (11) an dem Trägerteil (9B) gelagert ist,
- der Kabelbaum (17) zwischen/über dem Trägerteil (9B) und dem Strebenteil (9A) geführt ist, und
- die Abdeckung (18) sich zwischen/über dem Trägerteil (9B) und dem Strebenteil (9A) erstreckt.

4. Arbeitsfahrzeug nach Anspruch 3, wobei, um zu ermöglichen, dass der Kabelbaum (17) von einer Rückseite zu einer Innenseite der Abdeckung (18) eintritt, die Abdeckung (18) in einer Querschnittsform ausgebildet ist, die nach hinten geöffnet ist.

5. Arbeitsfahrzeug nach einem der Ansprüche 1 bis 4, wobei der Kabelbaum (17) durch ein Befestigungswerkzeug (19) an der Abdeckung (18) befestigt ist.

## Revendications

1. Véhicule de travail comprenant :
- une structure de protection contre le renversement (ROPS) (9) qui est disposée autour d'un siège de conducteur (7) ; et
- un dispositif de réception (11) qui est supporté sur une partie supérieure de la ROPS (9) et reçoit des informations de position d'un satellite ;
- dans lequel un faisceau (17) pour le dispositif de réception qui est prévu entre/à travers le dispositif de réception (11) et un dispositif de commande est acheminé le long d'une face périphérique externe de la ROPS (9),
dans lequel la ROPS (9) est située latéralement à l'extérieur par rapport au siège de conducteur (7), la ROPS (9) comprenant une paire de parties d'entretoise droite et gauche (9A) qui s'étendent dans une direction verticale, et une partie de poutre (9B) qui est située sur un côté supérieur par rapport au siège de conducteur (7) et s'étend dans la direction droite-gauche de la carrosserie de véhicule,
**caractérisé en ce que**
- un couvercle (18) qui est configuré pour couvrir le faisceau (17) est prévu,
- la ROPS (9) est pliable vers l'arrière autour d'un axe qui s'étend dans une direction droite-gauche d'une carrosserie de véhicule, et
- le faisceau (17) s'étend vers le bas le long de l'un des côtés dans la direction droite-gauche de la ROPS (9), et pénètre à travers une partie arrière d'un garde-boue, par rapport à l'axe, le garde-boue étant sur ledit un des côtés dans la direction droite-gauche,
- dans les parties d'entretoise (9A), il est prévu respectivement des parties de fixation (9a) auxquelles des feux de combinaison arrière (12) sont fixés respectivement, et
- le faisceau (17) s'étend vers le bas le long d'un côté avant de l'une des parties de fixation (9a).

2. Véhicule de travail selon la revendication 1, dans lequel le faisceau (17) est acheminé le long d'une partie latérale interne (S) dans la face périphérique externe de la ROPS (9), la partie latérale interne (S) étant dirigée vers un côté interne de la carrosserie de véhicule, et
le couvercle (18) est configuré pour couvrir le faisceau (17) de l'avant et du dessous.

3. Véhicule de travail selon la revendication 2, dans lequel
- le dispositif de réception (11) est supporté sur la partie poutre (9B),
- le faisceau (17) est acheminé entre/à travers la partie poutre (9B) et la partie entretoise (9A), et
- le couvercle (18) s'étend entre/à travers la partie poutre (9B) et la partie entretoise (9A).

4. Véhicule de travail selon la revendication 3, dans lequel, afin de permettre au faisceau (17) d'entrer d'un côté arrière à un intérieur du couvercle (18), le couvercle (18) est formé en une forme de section transversale qui est ouverte vers l'arrière.

5. Véhicule de travail selon l'une quelconque des revendications 1 à 4, dans lequel le faisceau (17) est fixé au couvercle (18) par un outil de fixation (19).
